# EUROPEAN PATENT APPLICATION

(11) **EP 4 618 285 A1**
(43) Date of publication of application: **17.09.2025**
(21) Application number: 23944844.2
(22) Date of filing: 26.09.2023
(51) Int. Cl.: H01M 50/289, H01M 50/30

(54) **BATTERY AND ELECTRICAL DEVICE**

(30) Priority: 11.07.2023 CN 202310843634
(71) Applicant: Contemporary Amperex Technology Co., Limited, Ningde, Fujian 352100 (CN)
(72) Inventor: WU, Kai, Ningde, Fujian 352100 (CN); LI, Xin, Ningde, Fujian 352100 (CN); LI, Yao, Ningde, Fujian 352100 (CN); PU, Yujie, Ningde, Fujian 352100 (CN); CHEN, Xiaobo, Ningde, Fujian 352100 (CN); HU, Lu, Ningde, Fujian 352100 (CN)
(74) Representative: Behr, Wolfgang
(86) International application number: PCT/CN2023/121703
(87) International publication number: WO 2025/010838

(57) **Abstract**

This application discloses a battery (200) and an electric device (100), pertaining to the technical field of battery devices. The battery (200) includes: a housing (10) provided with an inner cavity (11); a battery cell (20) installed within the inner cavity (11), where the battery cell (20) is provided with a pressure relief mechanism (21); a first partition (30) installed within the housing (10) to divide the inner cavity (11) into a first chamber (111) and a second chamber (112), the battery cell (20) is installed within the first chamber (111), the first partition (30) is provided with a first through hole (31), the first chamber (111) and the second chamber (112) are in communication with each other through the first through hole (31), and the pressure relief mechanism (21) is disposed opposite the first through hole (31) to allow fumes discharged from the battery cell (20) through the pressure relief mechanism (21) to flow into the second chamber (112); and a fume processing apparatus (40) installed within the second chamber (112), where the fume processing apparatus (40) is configured to process the fumes flowing into the second chamber (112) and discharge the processed fumes to outside of the battery (200). The technical solutions of this application are used to address the issues of environmental pollution and significant hazards to human health caused by fumes generated during thermal runaway of a battery.

## Description

This application claims priority to Chinese Patent Application No. 202310843634.2, filed with the China National Intellectual Property Administration on July 11, 2023 and entitled "BATTERY AND ELECTRIC DEVICE", which is incorporated herein by reference with its entirety.

### TECHNICAL FIELD

This application relates to the technical field of battery devices, and in particular, to a battery and an electric device.

### BACKGROUND

During the use of new energy batteries, there exists a possibility of thermal runaway. When a new energy battery undergoes thermal runaway, the battery cell of the new energy battery emits high-temperature fumes, and after emitted, the high-temperature fumes are initially contained within the housing. However, once the high-temperature fumes leak out of the housing or are discharged to the outside, the high-temperature fumes are combined with air. When the concentration of solid particulates and/or liquids in the fumes reaches a certain level and under the influence of high temperatures, black smoke and/or white smoke is easily generated. Moreover, the fumes contain toxic substances, posing significant pollution hazards. Once the fumes leak outside or are discharged to the outside, they not only pollute the environment but also pose hazards to human health.

### SUMMARY

An objective of embodiments of this application is to provide a battery and an electric device, including but not limited to addressing the issues of environmental pollution and significant hazards to human health caused by fumes generated during thermal runaway of a battery.

The embodiments of this application adopt the following technical solutions.

According to a first aspect, a battery is provided, including:
a housing provided with an inner cavity;
a battery cell installed within the inner cavity, where the battery cell is provided with a pressure relief mechanism;
a first partition installed within the housing to divide the inner cavity into a first chamber and a second chamber, where the battery cell is installed within the first chamber, the first partition is provided with a first through hole, the first chamber and the second chamber are in communication with each other through the first through hole, and the pressure relief mechanism is disposed opposite the first through hole to allow fumes discharged from the battery cell through the pressure relief mechanism to flow into the second chamber; and
a fume processing apparatus installed within the second chamber, where the fume processing apparatus is configured to process the fumes flowing into the second chamber and discharge the processed fumes to outside of the battery.

After the fumes have been processed, the harmfulness of the fumes is reduced, and the fumes are then discharged to the outside of the battery, reducing or even avoiding hazards to the lives and health of users and other people, thereby protecting the safety of lives of health of users and other people.

In some embodiments, the fume processing apparatus includes a cooling unit, and the cooling unit is configured to cool the fumes flowing into the second chamber. When the fumes flow into the second chamber, the cooling unit exchanges heat with the fumes, thereby reducing the temperature of the fumes.

In some embodiments, the cooling unit includes an exhaust baffle, the exhaust baffle is installed within the second chamber, the exhaust baffle is spaced apart from the first partition to form a first flow channel for guiding the fumes flowing into the second chamber, and the first flow channel is in communication with the first through hole. By providing the exhaust baffle and forming the flow channel, most or even all of the fumes flowing into the second chamber are guided to the cooling unit for heat exchange, thereby enabling cooling of the fumes and reducing the likelihood of combustion of the fumes.

In some embodiments, the first partition and/or the exhaust baffle is configured as a liquid cooling plate, and the liquid cooling plate is configured to exchange heat with the fumes flowing into the first flow channel so as to cool the fumes. The fumes flowing into the first flow channel can exchange heat with the liquid cooling plate, thereby cooling the fumes to a greater extent and further reducing the likelihood of combustion of the fumes.

In some embodiments, a plurality of second partitions are disposed within the first flow channel; every two adjacent second partitions are spaced apart; one end of each second partition abuts against the first partition, and/or the other end of each second partition abuts against the exhaust baffle; and first interval spaces formed between every two adjacent second partitions are in communication with each other to form the first flow channel. The first flow channel formed by the second partitions increases a flow path distance of the fumes, meaning the fumes flow for a longer time within the flow channel, which is conducive to cooling the fumes; additionally, when the first partition and/or the exhaust baffle is configured as a liquid cooling plate, the fumes have a longer contact time with the liquid cooling plate for heat exchange, allowing the liquid cooling plate to more fully exchange heat with the fumes, thereby enabling the liquid cooling plate to remove more heat to cool the fumes.

In some embodiments, the plurality of first interval spaces are sequentially in communication with each other end to end. This further increases the flow path distance of the fumes in the first flow channel, facilitating cooling of the fumes; additionally, when the first partition and/or the exhaust baffle is configured as a liquid cooling plate, the fumes can come into full contact with the liquid cooling plate, improving the efficiency of cooling.

In some embodiments, the second partition is a plate member made of a metal material, and the metal material includes but is not limited to copper, aluminum, or steel. This further enhances the cooling effect on the fumes, allowing more heat to be removed from the fumes as much as possible.

In some embodiments, the battery further includes a liquid pump, the liquid pump is configured to deliver a coolant to the liquid cooling plate, a pressure sensor and/or a temperature sensor is installed within the first flow channel, and the pressure sensor and/or the temperature sensor is electrically connected to the liquid pump. The liquid pump adjusts a flow rate and flow velocity of the delivered coolant, for example, increasing the flow rate and flow velocity of the coolant, based on a pressure increase of the first flow channel detected by the pressure sensor; and/or, the liquid pump adjusts the flow rate and flow velocity of the delivered coolant, for example, increasing the flow rate and flow velocity of the coolant, based on a temperature increase of the first flow channel detected by the temperature sensor. By increasing the flow rate and flow velocity of the coolant in the liquid cooling plate, cooling capacity circulation of the coolant is enhanced, improving the efficiency of removing heat from the fumes flowing into the flow channel, thereby allowing the fumes flowing into the flow channel to be rapidly cooled.

In some embodiments, the cooling unit further includes a heat-absorbing structure, the heat-absorbing structure is disposed on a side of the exhaust baffle facing away from the first partition, the heat-absorbing structure is in communication with the first flow channel, and the heat-absorbing structure is configured to absorb heat from the fumes. The fumes flow to the heat-absorbing structure for further cooling, thereby further reducing the likelihood of combustion of the fumes flowing into the second chamber.

In some embodiments, the heat-absorbing structure includes a first medium and a second medium, an accommodating space is provided in the side of the exhaust baffle facing away from the first partition, the accommodating space is in communication with the first flow channel, the first medium and the second medium both are disposed within the accommodating space, and when the fumes flow into the accommodating space, the first medium and the second medium come into contact with each other and undergo an endothermic reaction to absorb heat from the fumes. When the first medium and the second medium come into contact with each other, they undergo an endothermic reaction, thereby absorbing heat from high-temperature fumes to rapidly cool the high-temperature fumes.

In some embodiments, the heat-absorbing structure further includes a third partition, the third partition is disposed within the accommodating space to divide the accommodating space into a first accommodating cavity and a second accommodating cavity, the first medium is disposed in the first accommodating cavity, the second medium is disposed in the second accommodating cavity, the first accommodating cavity is in communication with the first flow channel, and when the fumes flow into the first accommodating cavity, the first accommodating cavity and the second accommodating cavity are in communication with each other to allow the first medium and the second medium to come into contact with each other and undergo an endothermic reaction to absorb heat from the fumes. When the fumes flow into the first accommodating cavity along the first flow channel, the first accommodating cavity and the second accommodating cavity may be in communication with each other by disabling a separating effect of the third partition, allowing the first medium and the second medium to come into contact with each other and undergo an endothermic reaction to absorb heat from the fumes.

In some embodiments, the first accommodating cavity is located below the second accommodating cavity, a bottom wall of the first accommodating cavity is provided with a first inlet, and the first accommodating cavity is in communication with the first flow channel through the first inlet. Providing the first inlet can facilitate smooth entry of the fumes into the first accommodating cavity.

In some embodiments, the first inlet is provided in plurality, and the plurality of first inlets are arranged in an array. This design can further facilitate smooth entry of the fumes into the first accommodating cavity.

In some embodiments, a sidewall of the first accommodating cavity is provided with a second inlet, and the first accommodating cavity is in communication with the first flow channel through the second inlet. Providing the second inlet can facilitate smooth entry of the fumes into the first accommodating cavity.

In some embodiments, the first medium is ammonium chloride, and the second medium is water. Ammonium chloride is a material that is readily available on the market and inexpensive, and water is even more easily obtainable, thereby reducing battery production costs and creating a low-cost advantage.

In some embodiments, the third partition is provided with a second through hole, a control valve is installed in the second through hole, and the control valve is configured to open when the fumes flow into the first accommodating cavity to enable communication between the first accommodating cavity and the second accommodating cavity. The control valve on the third partition automatically opens to enable communication between the first accommodating cavity and the second accommodating cavity, where the control valve responds sensitively and quickly, allowing the second medium in the second accommodating cavity to flow into the first accommodating cavity to come into contact with the first medium and undergo an endothermic reaction to absorb heat from the fumes, thereby cooling the fumes.

In some embodiments, the third partition is provided with a second through hole, a sealing member made of a heat-meltable material is installed in the second through hole, and when the fumes flow into the first accommodating cavity, the sealing member melts due to heat to enable communication between the first accommodating cavity and the second accommodating cavity. The high-temperature fumes cause the sealing member made of a heat-meltable material to melt, allowing the second medium in the second accommodating cavity to flow into the first accommodating cavity through the second through hole to come into contact with the first medium, where the second medium and the first medium undergo an endothermic reaction to absorb heat from the fumes, thereby cooling the fumes.

In some embodiments, the third partition is a plate member made of a heat-meltable material, and when the fumes flow into the first accommodating cavity, the third partition melts due to heat to enable communication between the first accommodating cavity and the second accommodating cavity. The third partition made of a heat-meltable material can melt just after it comes into contact with the high-temperature fumes, allowing the second medium in the second accommodating cavity to flow into the first accommodating cavity to come into contact with the first medium and undergo an endothermic reaction to absorb heat from the fumes, thereby cooling the fumes.

In some embodiments, the cooling unit is provided in plurality, and the plurality of cooling units are sequentially in communication with each other. Using the plurality of cooling units to cool the high-temperature fumes further reduces the likelihood of combustion of the fumes.

In some embodiments, the fume processing apparatus includes a separation unit, and the separation unit is configured to separate solid particulates and/or liquids from the fumes flowing into the second chamber. The fume processing apparatus is designed with the separation unit, and when the fumes flow into the second chamber, the separation unit separates and filters the solid particulates and/or liquids in the fumes, thereby reducing the concentration of solid particulates and/or liquids in the fumes.

In some embodiments, the fume processing apparatus includes a separation unit, the separation unit is configured to separate solid particulates and/or liquids from the fumes flowing into the second chamber, the separation unit is in communication with the cooling unit, and the separation unit is located downstream of the cooling unit along the flow direction of the fumes. When the fumes are discharged from the pressure relief mechanism and flow into the second chamber through the first through hole, the cooling unit first cools the fumes, and the cooled fumes then flow into the separation unit for separation and filtration, thereby reducing the concentration of solid particulates and/or liquids in the fumes.

In some embodiments, the separation unit includes an adsorption and filtration structure, and the adsorption and filtration structure is configured to adsorb and filter solid particulates and/or liquids in the fumes, thereby reducing the concentration of solid particulates and/or liquids in the fumes.

In some embodiments, the adsorption and filtration structure includes at least one of activated carbon filter cotton, activated carbon filter mesh, or honeycomb ceramic filter material.

In some embodiments, the separation unit further includes a plurality of fourth partitions, the plurality of fourth partitions are installed within the second chamber, every two adjacent fourth partitions are spaced apart, second interval spaces formed between every two adjacent fourth partitions are in communication with each other to form a second flow channel, and the adsorption and filtration structure is disposed within the second flow channel. The second flow channel formed by the plurality of fourth partitions increases a flow path distance of the fumes flowing through the adsorption and filtration structure, further adsorbing and filtering solid particulates and/or liquids in the fumes, thereby resulting in a lower concentration of solid particulates and/or liquids in the fumes.

In some embodiments, a plurality of second interval spaces are sequentially in communication with each other end to end. This can further increase the flow path distance of the second flow channel, allowing the adsorption and filtration structure to more fully adsorb and filter solid particulates and/or liquids in the fumes, thereby improving the adsorption and filtration efficiency for solid particulates and/or liquids in the fumes.

In some embodiments, the separation unit is provided in plurality, and the plurality of separation units are sequentially in communication. This further improves the adsorption and filtration efficiency for solid particulates and/or liquids in the fumes.

In some embodiments, the housing is provided with an exhaust hole, and the exhaust hole is used to discharge the fumes processed by the fume processing apparatus to the outside of the battery.

According to a second aspect, an electric device is provided. The electric device includes the battery as described above.

### BRIEF DESCRIPTION OF DRAWINGS

To more clearly illustrate the technical solutions in the embodiments of this application, the drawings required for use in the embodiments or exemplary technical descriptions are briefly introduced below. It is apparent that the drawings described below are only some embodiments of this application, and those of ordinary skill in the art can still obtain other drawings based on these drawings without creative effort.
FIG. 1 is a schematic exploded view of a battery according to some embodiments of this application;
FIG. 2 is a schematic cross-sectional view of the battery shown in FIG. 1;
FIG. 3 is a schematic partial cross-sectional view of the battery shown in FIG. 2;
FIG. 4 is a schematic enlarged view of location B in FIG. 3;
FIG. 5 is a schematic cross-sectional view along an A-A direction in FIG. 2;
FIG. 6 is a schematic enlarged view of location C in FIG. 5;
FIG. 7 is a schematic enlarged view of location D in FIG. 5;
FIG. 8 is a schematic exploded view of a battery according to some embodiments of this application;
FIG. 9 is a schematic assembly diagram of an exhaust baffle and each second partition in the battery shown in FIG. 8;
FIG. 10 is a schematic exploded view of a battery according to some embodiments of this application; and
FIG. 11 is a schematic structural diagram of an electric device according to an embodiment of this application.

### Description of reference signs:

200. battery;
10. housing; 11. inner cavity; 111. first chamber; 112. second chamber; 12. battery explosion-proof valve; 13. cover plate; 14. inner cavity space;
20. battery cell; 21. pressure relief mechanism;
30. first partition; 31. first through hole;
40. fume processing apparatus; 41. cooling unit; 411. exhaust baffle; 412. first flow channel; 413. second partition; 4130. first interval space; 42. heat-absorbing structure; 421. accommodating space; 4211. first accommodating cavity; 4212. second accommodating cavity; 4213. first inlet; 4214. second inlet; 4215. flow outlet; 422. third partition; 4221. control valve; 4221'. sealing member; 423. first medium; 424. second medium; 43. separation unit; 431. adsorption and filtration structure; 432. fourth partition; 4320. second interval space; 433. second flow channel;
51. liquid pump; 52. pressure sensor;
60. separation device; and
100. electric device.

### DESCRIPTION OF EMBODIMENTS

To make the objectives, technical solutions, and advantages of this application clearer, this application is further described in detail below in conjunction with the drawings and embodiments. It should be understood that the specific embodiments described herein are only used to explain the present invention and are not intended to limit this application.

It should be noted that when a component is referred to as being "fixed to" or "disposed on" another component, it may be directly or indirectly on the another component. When a component is referred to as being "connected to" another component, it may be directly or indirectly connected to the another component. The orientations or positional relationships indicated by the terms "upper", "lower", "left", "right", and the like are based on the orientations or positional relationships shown in the drawings, and are only for ease of description rather than for indicating or implying that the referred apparatus or element must have a specific orientation, be constructed or operated in a specific orientation, and therefore should not be construed as limiting this application. For those of ordinary skill in the art, the specific meanings of the above terms can be understood based on specific circumstances. The terms "first" and "second" are merely intended for ease of description and shall not be understood as an indication or implication of relative importance or an implicit indication of the number of technical features. "A plurality of" means two or more, unless otherwise specifically defined.

The technical solutions provided in this application are described in detail below with reference to the specific drawings and embodiments.

Currently, new energy, also known as renewable energy, is becoming increasingly important in societal development, and the application of new energy is rapidly expanding. New energy includes but is not limited to solar energy, wind energy, geothermal energy, and tidal energy, which are converted into electrical energy that is easy to store and utilize, and are applied to various industries through electrical energy output. To store the electrical energy converted from renewable energy, new energy batteries are essential. New energy batteries include but are not limited to lithium batteries, nickel-metal hydride batteries, and lead-acid batteries, where lithium batteries have more prominent advantages compared to other types of batteries. Therefore, various enterprises, universities, and research institutes are vigorously developing lithium batteries. Hereinafter, new energy batteries are collectively referred to as batteries.

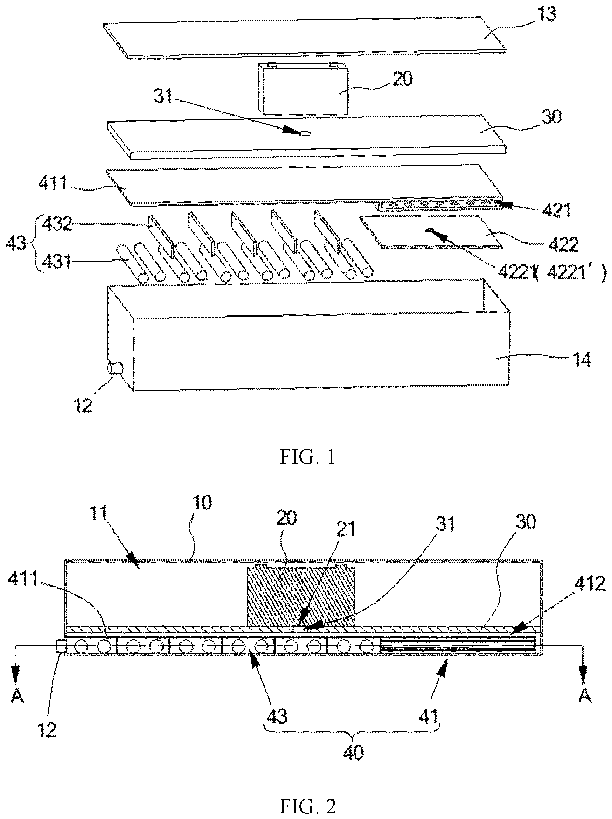

Generally, a battery includes a housing 10 and at least one battery cell 20, where most batteries are provided with a plurality of battery cells 20 to meet the demands of large power capacity. Hereinafter, each battery being provided with a plurality of battery cells 20 is used as an example for description. The housing 10 is provided with an inner cavity 11, and the plurality of battery cells 20 are collectively installed within the inner cavity 11, as shown in FIG. 1. The plurality of battery cells 20 are electrically connected in parallel, in series, or in series-parallel to output a required voltage and current.

During the use of the battery, after a period of use, the battery inevitably ages, or the temperature of the battery continuously rises during use, or the battery is affected by sudden changes in the usage environment (for example, overcharging, over-discharging, squeezing, collision, or other abnormal usage conditions) during use. All these factors may lead to the battery cell 20 of the battery being prone to thermal runaway. When the battery cell 20 undergoes thermal runaway, in addition to causing high-temperature risks (that are, combustion risks), it is accompanied by the generation of toxic and harmful gases such as CO, HF, HCl, CₓH_{y}, as well as solid particulates and/or liquids containing toxic and harmful heavy metals such as Ni, Co, and Mn. These substances and gases are mixed to ultimately form fumes. If these fumes accumulate in the inner cavity 11, the pressure and the concentration of solid particulates and/or liquids in the inner cavity 11 increase sharply. Therefore, the fumes generated during thermal runaway of the battery cell 20 must be effectively discharged from the inner cavity 11.

In related technologies, the fumes generated during thermal runaway of the battery cell 20 are directly discharged from the inner cavity 11. Direct discharge is the simplest and quickest method, but the direct discharge method does not reduce the toxicity of the fumes. The directly discharged fumes pollute the environment and also cause hazards to the lives and health of users and other people.

To reduce the harmfulness of the fumes generated during thermal runaway of the battery cell 20, the battery provided by the embodiments of this application adopts a method in which the fumes are first processed and then discharged. The method in which the fumes are first processed and then discharged allows for the formulation of corresponding processing methods based on actual needs, reducing the harmfulness of the fumes, protecting the environment, and also protecting the safety of lives and health of users and other people.

As shown in FIG. 1 and FIG. 2, a battery 200 provided by an embodiment of this application includes a housing 10, a battery cell 20, a first partition 30, and a fume processing apparatus 40. The housing 10 is provided with an inner cavity 11, and the battery cell 20 is installed within the inner cavity 11. In this embodiment of this application, as shown in FIG. 1, a single battery cell 20 is illustrated for explanation. The battery cell 20 is provided with a pressure relief mechanism 21. In this embodiment of this application, a first partition 30 is installed within the housing 10, and the first partition 30 divides the inner cavity 11 into a first chamber 111 and a second chamber 112. The battery cell 20 is installed within the first chamber 111. The first partition 30 is provided with a first through hole 31, and the first chamber 111 and the second chamber 112 are in communication with each other through the first through hole 31. The pressure relief mechanism 21 is disposed opposite the first through hole 31, the fumes generated within the battery cell 20 are discharged from the pressure relief mechanism 21, and the fumes discharged from the battery cell 20 flow into the second chamber 112 through the first through hole 31. The fume processing apparatus 40 is installed within the second chamber 112, and the fume processing apparatus 40 is configured to process the fumes flowing into the second chamber 112. After the fumes have been processed, the harmfulness of the fumes is reduced, and the fumes are then discharged to outside of the battery 200, reducing or even avoiding hazards to the lives and health of users and other people, thereby protecting the safety of lives and health of users and other people.

In some embodiments, the housing 10 is a rectangular or square housing formed by assembling a bottom plate, a cover plate 13, and four side panels (where the bottom plate and the four side panels form an inner cavity space 14), and accordingly, the inner cavity 11 is a rectangular or square inner cavity space 14. In this case, each battery cell 20 has a corresponding rectangular or square outer contour. This allows each battery cell 20 to fit the inner cavity 11, enabling more battery cells 20 to be installed in the limited space of the inner cavity 11, thereby improving the energy efficiency of the battery.

In some other embodiments, the housing 10 is a regular polygonal prismatic housing formed by assembling a bottom plate, a cover plate 13, and a plurality of side panels (where the bottom plate and the plurality of side panels form an inner cavity space 14), and accordingly, the inner cavity 11 is a regular polygonal prismatic inner cavity space 14. Alternatively, the housing 10 is a cylindrical housing formed by assembling a bottom plate, a cover plate 13, and a single side panel (where the bottom plate and the single side panel form an inner cavity space 14), and accordingly, the inner cavity 11 is a cylindrical inner cavity space 14. In this case, each battery cell 20 has a corresponding cylindrical outer contour. This allows each cylindrical battery cell 20 to fit the regular polygonal prismatic or cylindrical inner cavity 11, enabling more battery cells 20 to be installed in the limited space of the inner cavity 11, thereby improving the energy efficiency of the battery.

In some embodiments, the housing 10 is made of aluminum. Aluminum has superior ductility and plasticity compared to other metal materials (for example, compared to iron), and the housing 10 made of aluminum is lighter in weight. Additionally, the structural strength of the housing 10 made of aluminum is sufficient to meet the structural strength requirements for battery assembly.

The pressure relief mechanism 21 refers to an element or component that actuates to release internal pressure when the internal pressure or temperature of the battery cell 20 reaches a predetermined threshold. Here, "actuate" means that the pressure relief mechanism 21 performs actions to allow the internal pressure and temperature of the battery cell 20 to be released. The actions performed by the pressure relief mechanism 21 may include but are not limited to: rupturing, tearing, or melting of at least a portion of the pressure relief mechanism 21. After the pressure relief mechanism 21 actuates, the high-temperature fumes inside the battery cell 20 are discharged outward through the pressure relief mechanism 21. The predetermined threshold may be adjusted according to different design requirements. The predetermined threshold may depend on the materials of one or more of a positive electrode plate, a negative electrode plate, an electrolyte, and a separator in the battery cell 20. The pressure relief mechanism 21 may employ a component or element sensitive to pressure or temperature, such that when the internal pressure or temperature of the battery cell 20 reaches the predetermined threshold, the pressure relief mechanism 21 actuates to form a channel for releasing internal pressure. The pressure relief mechanism 21 being disposed opposite the first through hole 31 may specifically mean: the pressure relief mechanism 21 is directly aligned with the first through hole 31, that is, the pressure relief mechanism 21 is directly in communication with the first through hole 31. Alternatively, a communication channel is provided in a side of the first partition 30 facing away from the second chamber 112, the communication channel is in communication with the first through hole 31, and the pressure relief mechanism 21 is disposed opposite the communication channel.

As shown in FIG. 2, the fume processing apparatus 40 of the battery 200 according to this embodiment of this application includes a cooling unit 41, and the cooling unit 41 is configured to cool the fumes flowing into the second chamber 112. During thermal runaway of the battery cell 20, high-temperature fumes are generated within the battery cell 20, and the generated fumes contain solid particulates and/or liquids such as Ni, Co, and Mn. When the fumes are discharged from the pressure relief mechanism 21 and flow into the second chamber 112 through the first through hole 31, the temperature and pressure in the second chamber 112 rise sharply, and the concentration of solid particulates and/or liquids in the fumes increases. At this point, if a wall of the second chamber 112 ruptures under the pressure of the fumes, the fumes with elevated concentrations of solid particulates and/or liquids are combined with oxygen in the air, and under a high-temperature condition of the fumes, combustion may occur. Therefore, the fume processing apparatus 40 is designed with a cooling unit 41, and when the fumes flow into the second chamber 112, the cooling unit 41 exchanges heat with the fumes flowing into the second chamber 112, thereby reducing the temperature of the fumes. Even if the housing 10 ruptures due to the sharply increased pressure and thus causes the fumes to come into contact with air, the temperature of the fumes has been reduced through heat exchange with the cooling unit 41, so that the likelihood of combustion of the fumes can be reduced.

As shown in FIG. 1 to FIG. 4, the cooling unit 41 includes an exhaust baffle 411, and the exhaust baffle 411 is installed within the second chamber 112. The exhaust baffle 411 is spaced apart from the first partition 30 to form a first flow channel 412 for guiding the fumes flowing into the second chamber 112. The first flow channel 412 is in communication with the first through hole 31, meaning that when the battery cell 20 undergoes thermal runaway, the fumes generated within the battery cell 20 are discharged from the pressure relief mechanism 21 and flow directly into the first flow channel 412 through the first through hole 31. By providing the exhaust baffle 411 and forming the first flow channel 412, the fumes discharged from the pressure relief mechanism 21 flow along the first flow channel 412, preventing the fumes from randomly dispersing in various directions, that is, enabling the fumes to flow regularly into the second chamber 112 rather than diffusing randomly into the second chamber 112. Additionally, by providing the exhaust baffle 411 and forming the first flow channel 412, most or all of the fumes are guided to the cooling unit 41 for heat exchange, thereby enabling cooling of the fumes and reducing the likelihood of combustion of the fumes.

In some embodiments, the first partition 30 and/or the exhaust baffle 411 is configured as a liquid cooling plate, and the liquid cooling plate is configured to exchange heat with the fumes flowing into the first flow channel 412 so as to cool the fumes. The liquid cooling plate contains a coolant, and the coolant exchanges heat with the fumes to cool the fumes. The coolant may be water, a solution mixture of water and ethylene glycol, or the like, and the coolant may flow circularly. When the battery cell 20 undergoes thermal runaway, the fumes generated within the battery cell 20 are discharged from the pressure relief mechanism 21 and flow into the first flow channel 412. In this case, the fumes in the first flow channel 412 come into contact with the liquid cooling plate for heat exchange, and the coolant in the liquid cooling plate removes at least part of the heat from the fumes. In other words, the fumes discharged from the pressure relief mechanism 21 and just flowing into the first flow channel 412 can exchange heat with the liquid cooling plate, thereby cooling the fumes to a greater extent and further reducing the likelihood of combustion of the fumes. This further improves the efficiency of cooling the fumes.

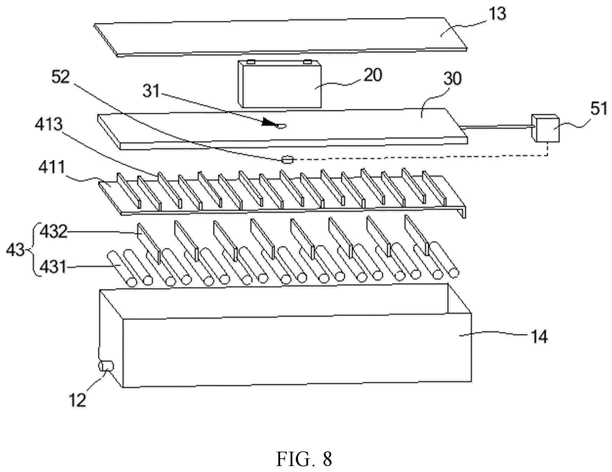

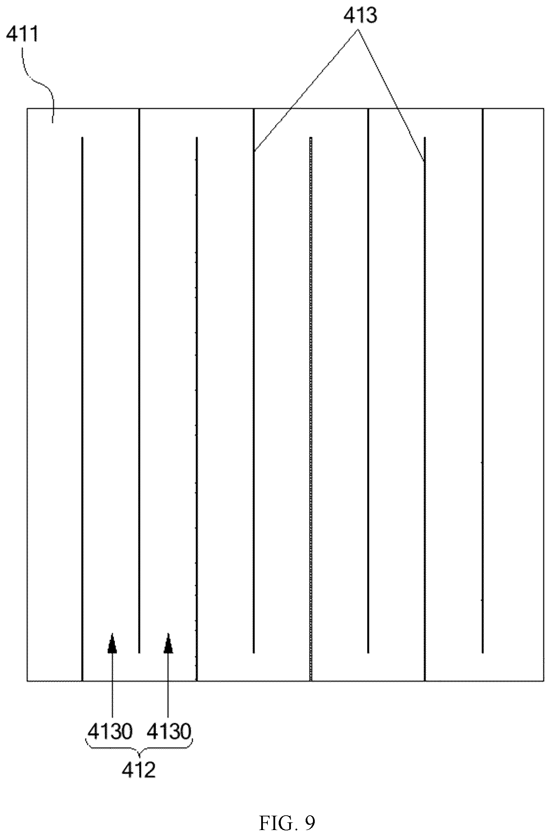

In some embodiments, a plurality of second partitions 413 are disposed within the first flow channel 412, as shown in FIG. 8 and FIG. 9. Every two adjacent second partitions 413 are spaced apart. A first interval space 4130 is formed between two adjacent second partitions 413, and two adjacent first interval spaces 4130 are in communication with each other to form the first flow channel 412. This increases the flow path distance of the fumes along the first flow channel 412, meaning the fumes flow for a longer time within the first flow channel 412, which is conducive to cooling the fumes. Additionally, when the first partition 30 and/or the exhaust baffle 411 is configured as a liquid cooling plate, the fumes have a longer contact time with the liquid cooling plate for heat exchange, allowing the liquid cooling plate to more fully exchange heat with the fumes, thereby enabling the liquid cooling plate to remove more heat to cool the fumes.

In some embodiments, each second partition 413 is a plate member made of a metal material, and the metal material includes but is not limited to copper, aluminum, or steel. The metal material has excellent thermal conductivity. In addition, one end of each second partition 413 abuts against the first partition 30, and/or the other end of each second partition 413 abuts against the exhaust baffle 411. When the first partition 30 and/or the exhaust baffle 411 is configured as a liquid cooling plate, each second partition 413 can rapidly transfer the heat of the fumes to the liquid cooling plate, allowing the coolant in the liquid cooling plate to remove the heat transferred by each second partition 413. In other words, as the fumes flow through the first flow channel 412, and when the first partition 30 and/or the exhaust baffle 411 is configured as a liquid cooling plate, the fumes not only come into contact with the liquid cooling plate but also come into contact with each second partition 413. The fumes transfer heat to each second partition 413, then each second partition 413 transfers the heat to the liquid cooling plate, and the coolant in the liquid cooling plate removes the heat transferred by each second partition 413. This can further enhance the cooling effect of the liquid cooling plate on the fumes, allowing more heat to be removed from the fumes as much as possible.

As shown in FIG. 8 and FIG. 9, a plurality of first interval spaces 4130 are sequentially in communication with each other end to end to form a serpentine first flow channel 412, further increasing the flow path distance of the fumes along the first flow channel 412, which is conducive to cooling the fumes. Additionally, when the first partition 30 and/or the exhaust baffle 411 is configured as a liquid cooling plate, the fumes can come into full contact with the liquid cooling plate and each second partition 413, improving the efficiency of cooling.

In some embodiments, as shown in FIG. 8, the battery 200 further includes a liquid pump 51, and the liquid pump 51 is configured to deliver a coolant to the liquid cooling plate. A pressure sensor 52 is installed within the first flow channel 412, and the pressure sensor 52 is electrically connected to the liquid pump 51. When the battery cell 20 undergoes thermal runaway, the fumes generated within the battery cell 20 are discharged from the pressure relief mechanism 21 and flow into the first flow channel 412, causing the pressure in the first flow channel 412 to rise rapidly. The pressure sensor 52 detects the pressure increase in the first flow channel 412 and then sends a detection signal indicating the pressure increase in the first flow channel 412 to the liquid pump 51. The liquid pump 51 increases the flow rate and flow velocity of the delivered coolant based on the detection signal sent by the pressure sensor 52 that indicates the pressure increase in the first flow channel 412. When the battery cell 20 undergoes thermal runaway, the fumes are instantaneously discharged from the pressure relief mechanism 21 and flow into the first flow channel 412, causing a large amount of fumes to accumulate instantaneously in the first flow channel 412. In other words, a large amount of heat accumulates instantaneously in the first flow channel 412. At this point, by increasing the flow rate and flow velocity of the coolant in the liquid cooling plate the cooling capacity circulation of the coolant is enhanced, improving the efficiency of removing heat from the fumes flowing into the first flow channel 412, thereby allowing the fumes flowing into the first flow channel 412 to be rapidly cooled.

In some other embodiments of this application, the battery 200 further includes a liquid pump 51, and the liquid pump 51 is configured to pump a coolant to the liquid cooling plate. A temperature sensor (not shown in the figure) is installed within the first flow channel 412, and the temperature sensor is configured to detect the temperature in the first flow channel 412. In addition, the temperature sensor is electrically connected to the liquid pump 51, and the liquid pump 51 adjusts the flow rate and flow velocity of the delivered coolant based on the temperature in the first flow channel 412 detected by the temperature sensor. When the battery cell 20 undergoes thermal runaway, the high-temperature fumes generated within the battery cell 20 are discharged from the pressure relief mechanism 21 and flow into the first flow channel 412 through the first through hole 31 in the first partition 30, causing the temperature in the first flow channel 412 to rise rapidly. The temperature sensor detects the temperature increase in the first flow channel 412 and then sends a detection signal indicating the temperature increase in the first flow channel 412 to the liquid pump 51. The liquid pump 51 increases the flow rate and flow velocity of the coolant delivered to the liquid cooling plate based on the detection signal sent by the temperature sensor, improving the efficiency of removing the heat transferred to the liquid cooling plate, thereby allowing the high-temperature fumes in the first flow channel 412 to be rapidly cooled.

In some other embodiments of this application, the cooling apparatus further includes a liquid pump 51, and the liquid pump 51 is configured to pump a coolant to the liquid cooling plate. Both a pressure sensor and a temperature sensor are installed within the first flow channel 412, and both the pressure sensor and the temperature sensor are electrically connected to the liquid pump 51. When high-temperature fumes flow into the first flow channel 412, the pressure sensor and the temperature sensor respectively detect pressure increase and temperature increase in the first flow channel 412, and then both the pressure sensor and the temperature sensor send detection signals to the liquid pump 51. The liquid pump 51 increases the flow rate and flow velocity of the coolant delivered to the liquid cooling plate upon receiving either a pressure signal or a temperature signal, or receiving both, improving the efficiency of removing the heat transferred to the liquid cooling plate, thereby allowing the high-temperature fumes in the first flow channel 412 to be rapidly cooled.

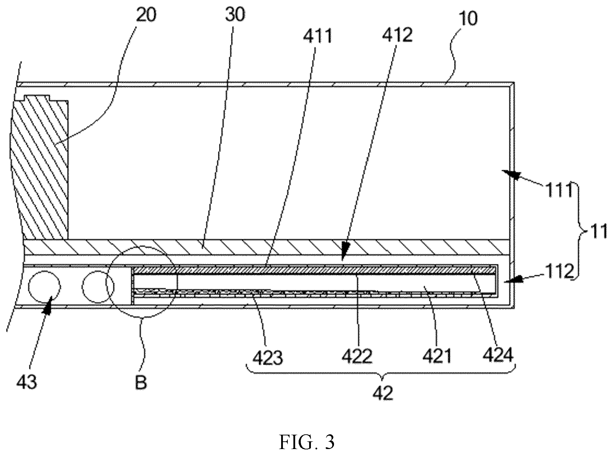

In some embodiments, as shown in FIG. 3, the cooling unit 41 further includes a heat-absorbing structure 42, the heat-absorbing structure 42 is disposed on a side of the exhaust baffle 411 facing away from the first partition 30, the heat-absorbing structure 42 is in communication with the first flow channel 412, and the heat-absorbing structure 42 is configured to absorb heat from the fumes. The fumes flow to the heat-absorbing structure 42 for further cooling, thereby further reducing the likelihood of combustion of the fumes flowing into the second chamber 112.

In some embodiments, the heat-absorbing structure 42 includes a first medium 423 and a second medium 424. An accommodating space 421 is provided in the side of the exhaust baffle 411 facing away from the first partition 30, the accommodating space 421 is in communication with the first flow channel 412, and both the first medium 423 and the second medium 424 are disposed within the accommodating space 421. When the fumes flow into the accommodating space 421 along the first flow channel 412, the first medium 423 and the second medium 424 come into contact with each other and undergo an endothermic reaction to absorb heat from the fumes. When the first medium 423 and the second medium 424 come into contact with each other, they undergo an endothermic reaction, thereby absorbing heat from the high-temperature fumes to rapidly cool the high-temperature fumes.

In some embodiments, the heat-absorbing structure 42 further includes a third partition 422, and the third partition 422 is disposed within the accommodating space 421 to divide the accommodating space 421 into a first accommodating cavity 4211 and a second accommodating cavity 4212. The first medium 423 is disposed in the first accommodating cavity 4211, and the second medium 424 is disposed in the second accommodating cavity. The first accommodating cavity 4211 is in communication with the first flow channel 412. When the fumes flow into the first accommodating cavity 4211 along the first flow channel 412, the first accommodating cavity 4211 and the second accommodating cavity 4212 are in communication with each other, allowing the first medium 423 and the second medium 424 to come into contact with each other and undergo an endothermic reaction to absorb heat from the fumes.

As shown in FIG. 1 to FIG. 3, in some embodiments, the second chamber 112 is located below the first chamber 111, and in this case, the terms "upper", "lower", "left", "right", "front", and "rear" are defined based on the battery being in a normal use state.

In some embodiments, the first medium 423 is ammonium chloride, and the second medium 424 is water. Ammonium chloride is a material that is readily available on the market and inexpensive, and water is tap water that is even more easily obtainable, thereby reducing battery production costs and creating a low-cost advantage.

In some embodiments, the third partition 422 is a plate member made of a metal material, where the third partition 422 includes but is not limited to a plate member made of metal aluminum or a plate member made of metal copper.

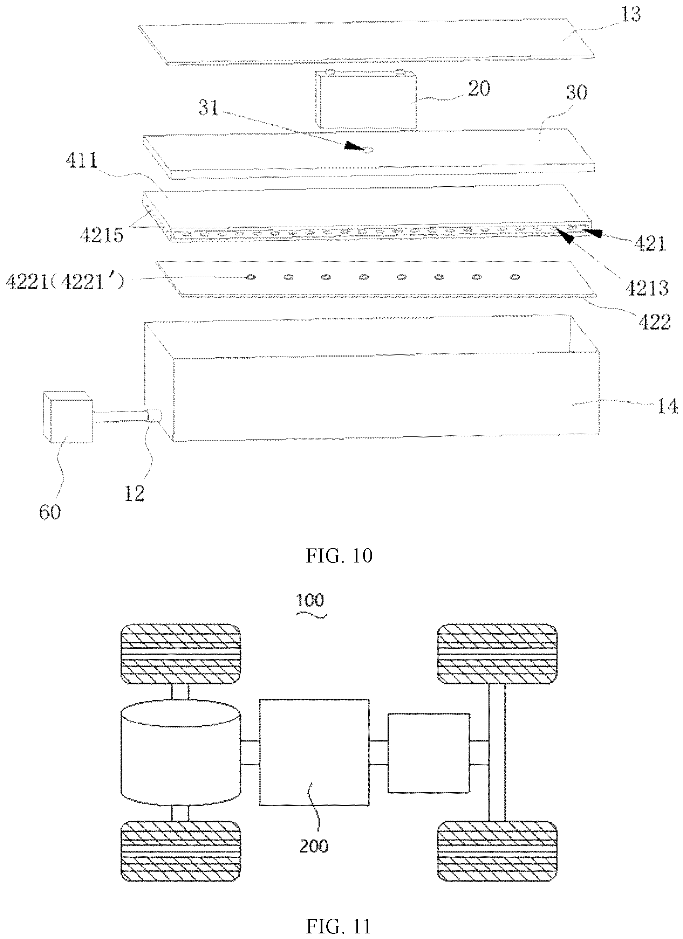

In some embodiments, as shown in FIG. 10, the third partition 422 is provided with a second through hole. A control valve 4221 is installed in the second through hole. The control valve 4221 is configured to open when the fumes flow into the first accommodating cavity 4211, enabling communication between the first accommodating cavity 4211 and the second accommodating cavity 4212, thereby allowing the second medium 424 to enter the first accommodating cavity 4211 to come into contact with the first medium 423 and undergo an endothermic reaction to absorb heat from the fumes. The control valve 4221 on the third partition 422 is used to automatically open to enable communication between the first accommodating cavity 4211 and the second accommodating cavity 4212. The control valve 4221 includes but is not limited to an electromagnetic control valve and a thermal expansion valve. In these embodiments, the control valve 4221 needs to be assembled and operated in conjunction with a pressure sensor 52, and the control valve 4221 is electrically connected to the pressure sensor 52. When the battery cell 20 undergoes thermal runaway, the fumes generated within the battery cell 20 are discharged from the pressure relief mechanism 21 and flow into the first flow channel 412, causing the pressure in the first flow channel 412 to rise rapidly. The pressure sensor 52 detects the pressure increase in the first flow channel 412, and then the pressure sensor 52 sends a detection signal indicating the pressure increase in the first flow channel 412 to the control valve 4221. The control valve 4221 opens based on the detection signal from the pressure sensor 52 that indicates the pressure increase in the first flow channel 412. The control valve 4221 responds sensitively and quickly, allowing the second medium 424 in the second accommodating cavity 4212 to enter the first accommodating cavity 4211 to come into contact with the first medium 423 and undergo an endothermic reaction to absorb heat from the fumes, thereby cooling the fumes.

In some embodiments, as shown in FIG. 10, the third partition 422 is provided with a second through hole, and a sealing member 4221' made of a heat-meltable material is installed in the second through hole. When the fumes flow into the first accommodating cavity 4211, the sealing member 4221' melts due to heat to enable communication between the first accommodating cavity 4211 and the second accommodating cavity 4212. A passive opening method is used, in which the sealing member 4221' made of a heat-meltable material is disposed in the second through hole of the third partition 422, and the sealing member 4221' melts due to the high temperature of the fumes to enable communication between the first accommodating cavity 4211 and the second accommodating cavity 4212. In these embodiments, when the battery cell 20 undergoes thermal runaway, the fumes generated within the battery cell 20 are discharged from the pressure relief mechanism 21 and flow into the first flow channel 412, and the high-temperature fumes then flow into the first accommodating cavity 4211 and come into contact with the sealing member 4221' made of a heat-meltable material. The high-temperature fumes cause the sealing member 4221' made of a heat-meltable material to melt, allowing the second medium 424 in the second accommodating cavity 4212 to flow into the first accommodating cavity 4211 through the second through hole to come into contact with the first medium 423. The second medium 424 and the first medium 423 undergo an endothermic reaction to absorb heat from the fumes, thereby cooling the fumes.

In some embodiments, the third partition 422 is a plate member made of a heat-meltable material. When the fumes flow into the first accommodating cavity 4211, the third partition 422 melts due to heat to enable communication between the first accommodating cavity 4211 and the second accommodating cavity 4212. A passive opening method is used, in which a third partition 422 is made of a heat-meltable material, and the third partition 422 melts due to the high temperature of the fumes to enable communication between the first accommodating cavity 4211 and the second accommodating cavity 4212. In these embodiments, when the battery cell 20 undergoes thermal runaway, the fumes generated within the battery cell 20 are discharged from the pressure relief mechanism 21 and flow into the first flow channel 412, and the high-temperature fumes then flow into the first accommodating cavity 4211 and come into contact with the third partition 422. The high-temperature fumes cause at least a portion of the third partition 422 made of a heat-meltable material to melt, allowing the second medium 424 in the second accommodating cavity 4212 to flow into the first accommodating cavity 4211 through the melted portion to come into contact with the first medium 423. The second medium 424 and the first medium 423 undergo an endothermic reaction to absorb heat from the fumes, thereby cooling the fumes.

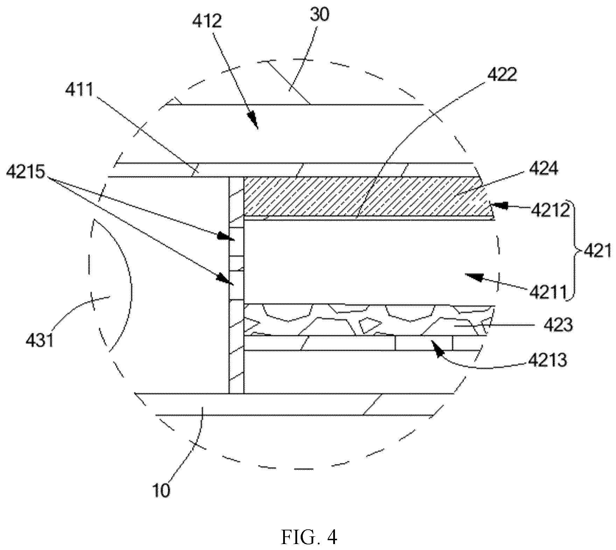

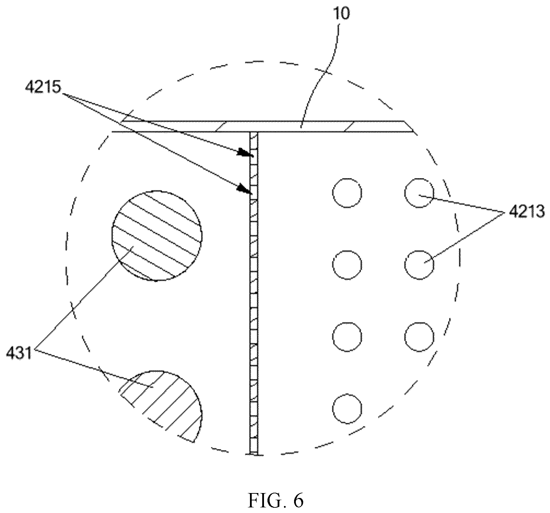

As shown in FIG. 4 to FIG. 7, in some embodiments, the first accommodating cavity 4211 is located below the second accommodating cavity 4212, and a bottom wall of the first accommodating cavity 4211 is provided with a first inlet 4213. The first accommodating cavity 4211 is in communication with the first flow channel 412 through the first inlet 4213. The high-temperature fumes first flow from the first flow channel 412 to below the bottom wall of the first accommodating cavity 4211, and then the fumes flow from bottom up into the first accommodating cavity 4211 through the first inlet 4213. Providing the first inlet 4213 can facilitate smooth entry of the fumes into the first accommodating cavity 4211.

In some embodiments, the first inlet 4213 is provided in plurality, and the plurality of first inlets 4213 are arranged in an array. Optionally, the plurality of first inlets 4213 are arranged in a rectangular array. This design can further facilitate smooth entry of the fumes into the first accommodating cavity 4211. Optionally, along the flow direction of the fumes, a distribution density of the first inlets 4213 per unit area on the bottom wall of the first accommodating cavity 4211 is increasingly smaller. Thus, when the fumes flow to below the bottom wall of the first accommodating cavity 4211, part of the fumes immediately flow into the first accommodating cavity 4211 through the first inlets 4213, while another part of the fumes continue to flow along the bottom wall of the first accommodating cavity 4211, and this part of fumes also enter the first accommodating cavity 4211 through other first inlets 4213. In other words, when the fumes flow from the first flow channel 412 to below the bottom wall of the first accommodating cavity 4211, along the flow direction of the fumes, the first inlets 4213 are configured to be gradually sparser along the flow direction of the fumes. Thus, during the flowing process, the fumes gradually flow into the first accommodating cavity 4211 through the first inlets 4213. Along the flow direction of the fumes, the number of the first inlets 4213 on the bottom wall of the first accommodating cavity 4211 decreases, and this design enables a more rational distribution of the first inlets 4213.

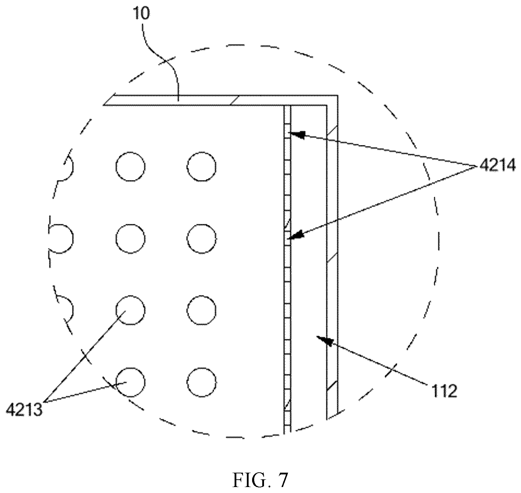

In some embodiments, as shown in FIG. 7, a sidewall of the first accommodating cavity 4211 is provided with a second inlet 4214, and the first accommodating cavity 4211 is in communication with the first flow channel 412 through the second inlet 4214. In other words, the fumes flow along the first flow channel 412, and the fumes can enter the first accommodating cavity 4211 through the second inlet 4214. Providing the second inlet 4214 can facilitate smooth entry of the fumes into the first accommodating cavity 4211.

In some embodiments, the cooling unit 41 is provided in plurality, and the plurality of cooling units 41 are sequentially in communication with each other. In other words, along the flow direction of the fumes, the plurality of cooling units 41 are sequentially in communication with each other. The plurality of cooling units 41 may be the same or different. The use of the plurality of cooling units 41 for cooling the high-temperature fumes further reduces the likelihood of combustion of the cooled fumes.

When the cooling unit 41 is provided in plurality, every two adjacent cooling units 41 are spaced apart, and a flow outlet 4215 is provided on a sidewall of the first accommodating cavity 4211 of the preceding cooling unit 41 opposite the second inlet 4214, and the first inlet 4213 and the second inlet 4214 of the subsequent cooling unit 41 are in communication with the flow outlet 4215. In any cooling unit 41, after the second medium 424 in the second accommodating cavity 4212 enters the first accommodating cavity 4211, a height of the second medium 424 is less than a height of the flow outlet 4215.

In some embodiments, the fume processing apparatus 40 includes a separation unit 43, and the separation unit 43 is configured to separate solid particulates and/or liquids from the fumes flowing into the second chamber 112. During thermal runaway of the battery cell 20, high-temperature fumes are generated within the battery cell 20, and the generated fumes contain solid particulates and/or liquids such as Ni, Co, and Mn. When the fumes are discharged from the pressure relief mechanism 21 and flow into the second chamber 112 through the first through hole 31, the temperature and pressure in the second chamber 112 rise sharply, and the concentration of solid particulates and/or liquids in the fumes increases. At this point, if the wall of the second chamber 112 ruptures under the pressure of the fumes, or if the high-temperature fumes are directly discharged to the outside of the battery 200, the fumes with elevated concentrations of solid particulates and/or liquids are combined with oxygen in the air, and under a high-temperature condition of the fumes, combustion may occur. Therefore, the fume processing apparatus 40 is designed with the separation unit 43, and when the fumes flow into the second chamber 112, the separation unit 43 separates and filters the solid particulates and/or liquids in the fumes, thereby reducing the concentration of solid particulates and/or liquids in the fumes. Thus, when the fumes whose solid particulates and/or liquids are separated and filtered are discharged to the outside of the battery 200, no black smoke appears. Even if the housing 10 ruptures due to the sharply increased pressure and thus causes the fumes to come into contact with air, the concentration of solid particulates and/or liquids in the fumes has been reduced, so that the fumes discharged to the outside of the battery 200 are nearly transparent with a mild odor (or even with no irritating odor), protecting the environment without causing sensory discomfort for users or other people.

In some embodiments, as shown in FIG. 1 and FIG. 4 to FIG. 6, the separation unit 43 includes an adsorption and filtration structure 431, and the adsorption and filtration structure 431 is configured to adsorb and filter solid particulates and/or liquids in the fumes. The adsorption and filtration structure 431 is installed in the second chamber 112. When the battery cell 20 undergoes thermal runaway, the fumes discharged from the battery cell 20 flow into the second chamber 112 through the first through hole 31, and the adsorption and filtration structure 431 adsorbs and separates the solid particulates and/or liquids in the fumes, thereby reducing the concentration of solid particulates and/or liquids in the fumes. The adsorption and filtration structure 431 includes but is not limited to activated carbon filter cotton, honeycomb activated carbon filter mesh, coconut shell activated carbon filter mesh, and honeycomb ceramic filter material, but the adsorption and filtration structure 431 is required to be capable of withstanding high temperatures.

In some embodiments, as shown in FIG. 1, FIG. 5, and FIG. 8, the separation unit 43 further includes a plurality of fourth partitions 432, every two adjacent fourth partitions 432 are spaced apart, and second interval spaces 4320 formed between every two adjacent fourth partitions 432 are in communication with each other to form a second flow channel 433, and the adsorption and filtration structure 431 is disposed within the second flow channel 433. The second flow channel 433 formed by the plurality of fourth partitions 432 increases the flow path distance of the fumes flowing through the adsorption and filtration structure 431, further adsorbing and filtering solid particulates and/or liquids in the fumes, thereby resulting in a lower concentration of solid particulates and/or liquids in the fumes.

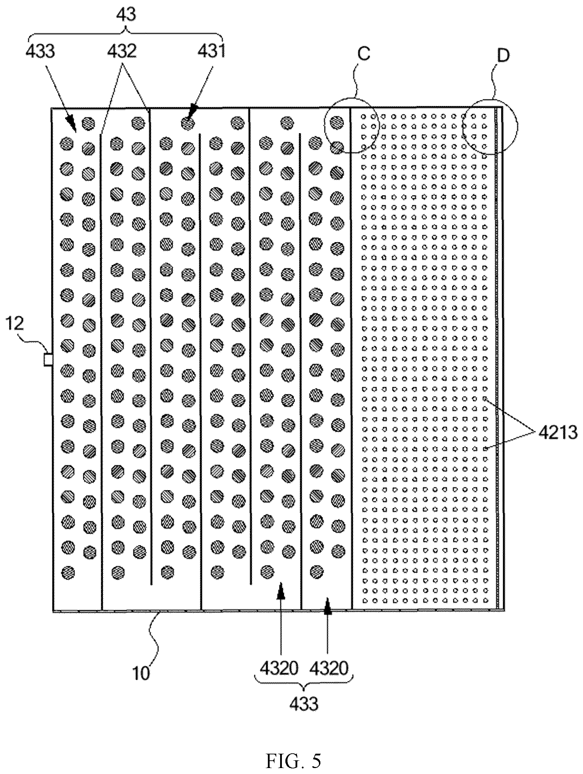

In some embodiments, as shown in FIG. 5, a plurality of second interval spaces 4320 are sequentially in communication with each other end to end to form a serpentine second flow channel 433, further increasing the flow path distance of the fumes along the second flow channel 433. This allows the adsorption and filtration structure 431 to more fully adsorb and filter solid particulates and/or liquids in the fumes, improving the adsorption and filtration efficiency for solid particulates and/or liquids in the fumes.

In some embodiments, the separation unit 43 is provided in plurality, and the plurality of separation units 43 are sequentially in communication. In other words, along the flow direction of the fumes, the plurality of separation units 43 are sequentially in communication with each other. The adsorption and filtration structures 431 used in the separation units 43 may be the same or different. In an example in which two separation units 43 are connected, the first separation unit 43 includes but is not limited to use of activated carbon filter cotton, and the second separation unit 43 includes but is not limited to use of coconut shell activated carbon filter mesh. Optionally, structures of the plurality of separation units 43 may be the same or different. This further improves the adsorption and filtration efficiency for solid particulates and/or liquids in the fumes.

In some embodiments, as shown in FIG. 10, the separation unit 43 is configured as a separation device 60 independent of the housing 10, and the separation device 60 includes one of a cyclone separation device, a gravity separation device, an inertial force separation device, a wet foam separation device, or an electrostatic separation device, or several of them in communication in sequence. In these embodiments, the cyclone separation device, gravity separation device, inertial force separation device, wet foam separation device, and electrostatic separation device are respectively independent devices relative to the housing 10 and are connected to the second chamber 112 via pipelines, thereby guiding the fumes flowing into the second chamber 112 into the separation device for separation and filtration of solid particulates and/or liquids in the fumes.

A cyclone separator is a device used for separation of a gas-solid system or a liquid-solid system. The working principle is based on the rotational motion caused by tangential introduction of gas flow, where solid particles or liquid droplets with relatively large inertial centrifugal force are thrown toward an outer wall surface and separated. The main features of a cyclone separator are simple structure, high operational flexibility, high efficiency, and ease of management and maintenance, making it a widely used separation device in industry.

A gravity separation device achieves separation primarily by utilizing a density difference (that is, a difference in gravity in a gravitational field) between a medium and a substance to be separated, and is therefore also called a gravity separator.

An inertial force separation device, also known as a momentum separator, achieves separation by utilizing the inertia of particles or liquid droplets entrained in the gas flow. Obstacles are placed in the path of the gas flow, causing the gas flow to make a sudden turn as it passes around the obstacle, and particles or liquid droplets collide with the obstacle and are collected. A smaller a turning curvature radius of the gas flow results in higher efficiency. Inertial separators are similar in principle to cyclone separators. The separator may also be filled with a loose fibrous material instead of a rigid baffle. In this case, sedimentation, inertial, and filtration effects all contribute to the separation effect. If the filler is wetted with a viscous liquid, the separation efficiency can be further improved.

A wet foam separation device operates based on the principle of adsorption, where bubbles are introduced into a liquid containing surface-active substances, causing the surface-active substances in the liquid to accumulate at a gas-liquid interface (the surfaces of the bubbles), forming a foam layer above the liquid body. By separating the foam layer from the liquid body, the surface-active substances (in the foam layer) can be concentrated, and the liquid body can be purified. The concentrated substances may be surface-active substances or substances capable of being complexed with surface-active substances, but they must have the capability to be complexed or chelated with a certain type of surface-active substance. Typically, methods that use gas bubbling in a solution to achieve separation or concentration are collectively referred to as foam adsorption separation technology, which is called foam separation technology for short, and thus a wet foam separation device is also referred to as a foam adsorption separator.

An electrostatic separator, also known as electrostatic separation device, separates a conductive substance from a non-conductive substance through high-voltage electrostatic with high separation efficiency, where the separation effect is as high as 99%.

In some embodiments, the battery may include only a cooling unit 41. When the fumes are discharged from the pressure relief mechanism 21 and flow into the second chamber 112 through the first through hole 31, the cooling unit 41 cools the fumes, thereby reducing the likelihood of combustion of the fumes. Alternatively, in some other embodiments, the battery may include only a separation unit 43. When the fumes are discharged from the pressure relief mechanism 21 and flow into the second chamber 112 through the first through hole 31, the separation unit 43 separates and filters solid particulates and/or liquids in the fumes, thereby reducing the concentration of solid particulates and/or liquids in the fumes.

In some embodiments, as shown in FIG. 2, the fume processing apparatus 40 includes both a cooling unit 41 and a separation unit 43, where the separation unit 43 is located downstream of the cooling unit 41 along the flow direction of the fumes, and the separation unit 43 is in communication with the cooling unit 41. In other words, an inlet of the second flow channel 433 of the separation unit 43 is in communication with a flow outlet 4215 of the cooling unit 41, enabling communication between the separation unit 43 and the cooling unit 41. In these embodiments of this application, when the battery cell 20 undergoes thermal runaway, high-temperature fumes are generated within the battery cell 20, and the generated fumes contain solid particulates and/or liquids such as Ni, Co, and Mn. When the fumes are discharged from the pressure relief mechanism 21 and flow into the second chamber 112 through the first through hole 31, the cooling unit 41 first cools the fumes, and the cooled fumes then flow into the separation unit 43 for adsorption and filtration, thereby reducing the concentration of solid particulates and/or liquids in the fumes.

In the embodiments of this application, as shown in FIG. 1, FIG. 2, FIG. 5, and FIG. 8, the housing 10 is provided with an exhaust hole, and the exhaust hole is used to discharge the fumes processed by the fume processing apparatus to the outside of the battery 200. Optionally, a battery explosion-proof valve 12 is installed at the exhaust hole, and the battery explosion-proof valve 12 is configured to discharge the processed fumes to the outside of the battery 200. To be specific, the flow outlet 4215 of the cooling unit 41 and/or the outlet of the second flow channel 433 of the separation unit 43 is in communication with the battery explosion-proof valve 12. When the battery cell 20 undergoes thermal runaway, the fumes generated by the battery cell 20 are cooled by the cooling unit 41 and/or separated and filtered by the separation unit 43, so that the fumes are processed into low-temperature and low-pollution gases, which are then discharged to the outside of the battery 200 through the battery explosion-proof valve 12. Thus, when the fumes processed by the fume processing apparatus 40 are discharged to the outside of the battery 200, the likelihood of combustion of the fumes is reduced to protect the safety of lives and property of users or other people, and the pollution hazards of the fumes are also reduced to protect the environment.

When the separation unit 43 is configured as one of a cyclone separation device, a gravity separation device, an inertial force separation device, a wet foam separation device, or an electrostatic separation device or several of them in communication in sequence, the separation device is connected to the battery explosion-proof valve 12 via a pipeline as shown in FIG. 10, the fumes from the second chamber 112 are inputted into the separation device through the battery explosion-proof valve 12 via the pipeline, and the separation device separates and filters solid particulates and/or liquids in the fumes. Subsequently, the separation device discharges the fumes whose solid particulates and/or liquids are separated and filtered to the outside of the battery 200.

According to another aspect of the embodiments of this application, an electric device 100 is provided, as shown in FIG. 11. In this embodiment of this application, the electric device 100 includes the battery 200 as described above, where the battery 200 provides electrical energy for the normal operation of the electric device 100. The electric device 100 includes but is not limited to a new energy electric vehicle. Alternatively, the electric device 100 may alternatively be a large-size energy storage device, and this energy storage device uses the battery 200 described above to store electrical energy.

In this embodiment of this application, the battery includes a housing 10, a plurality of battery cells 20, a first partition 30, an exhaust baffle 411, a plurality of second partitions 413, a first medium 423, a second medium 424, an adsorption and filtration structure 431, and a plurality of fourth partitions 432. An inner cavity 11 of the housing 10 is divided by the first partition 30 into a first chamber 111 and a second chamber 112. The plurality of battery cells 20 are installed in the first chamber 111, and the exhaust baffle 411, the second partitions 413, the first medium 423, the second medium 424, the adsorption and filtration structure 431, and the fourth partitions 432 are all installed in the second chamber 112. The plurality of second partitions 413 are installed between the first partition 30 and the exhaust baffle 411 to form a serpentine first flow channel 412. Additionally, an accommodating space 421 is provided in a side of the exhaust baffle 411 facing away from the first partition 30, and the accommodating space 421 is in communication with the first flow channel 412. The accommodating space 421 is divided by a third partition 422 into a first accommodating cavity 4211 and a second accommodating cavity 4212 arranged vertically (with the first accommodating cavity 4211 located below the second accommodating cavity 4212). The first medium 423 is disposed in the first accommodating cavity 4211, the first medium 423 is ammonium chloride, the second medium 424 is disposed in the second accommodating cavity 4212, and the second medium 424 is water, where the third partition 422 is made of a heat-meltable material. The plurality of fourth partitions 432 are spaced apart to form a serpentine second flow channel 433, the second flow channel 433 is in communication with the first accommodating cavity 4211, and the adsorption and filtration structure 431 is disposed within the second flow channel 433. Thus, when a battery cell 20 undergoes thermal runaway, the fumes generated within the battery cell 20 are discharged and flow into the first flow channel 412, and then the fumes flow into the first accommodating cavity 4211. At this point, the third partition 422 melts due to heat, allowing the first medium 423 and the second medium 424 to come into contact with each other and undergo an endothermic reaction to absorb heat from the fumes. The cooled fumes then flow into the second flow channel 433, and during the flowing process, solid particulates and/or liquids in the fumes are adsorbed and filtered by the adsorption and filtration structure 431, allowing the fumes discharged to the outside of the battery 200 to have low temperature and low pollution.

The above descriptions are only optional embodiments of this application and are not intended to limit this application. For those skilled in the art, this application may have various changes and variations. Any modifications, equivalent substitutions, improvements, and the like made within the spirit and principles of this application shall be included within the scope of the claims of this application.

## Claims

1. A battery, comprising:
a housing provided with an inner cavity;
a battery cell installed within the inner cavity, wherein the battery cell is provided with a pressure relief mechanism;
a first partition installed within the housing to divide the inner cavity into a first chamber and a second chamber, wherein the battery cell is installed within the first chamber, the first partition is provided with a first through hole, the first chamber and the second chamber are in communication with each other through the first through hole, and the pressure relief mechanism is disposed opposite the first through hole to allow fumes discharged from the battery cell through the pressure relief mechanism to flow into the second chamber; and
a fume processing apparatus installed within the second chamber, wherein the fume processing apparatus is configured to process the fumes flowing into the second chamber and discharge the processed fumes to outside of the battery.

2. The battery according to claim 1, wherein
the fume processing apparatus comprises a cooling unit, wherein the cooling unit is configured to cool the fumes flowing into the second chamber.

3. The battery according to claim 2, wherein
the cooling unit comprises an exhaust baffle installed within the second chamber, wherein the exhaust baffle is spaced apart from the first partition to form a first flow channel for guiding the fumes flowing into the second chamber, and the first flow channel is in communication with the first through hole.

4. The battery according to claim 3, wherein
the first partition and/or the exhaust baffle is configured as a liquid cooling plate, wherein the liquid cooling plate is configured to exchange heat with the fumes flowing into the first flow channel so as to cool the fumes.

5. The battery according to claim 3, wherein
a plurality of second partitions are disposed within the first flow channel, wherein every two adjacent second partitions are spaced apart;
one end of each second partition abuts against the first partition, and/or the other end of each second partition abuts against the exhaust baffle; and
first interval spaces formed between every two adjacent second partitions are in communication with each other to form the first flow channel.

6. The battery according to claim 5, wherein
a plurality of first interval spaces are sequentially in communication with each other end to end.

7. The battery according to claim 4, wherein
the battery further comprises a liquid pump; the liquid pump is configured to deliver a coolant to the liquid cooling plate; a pressure sensor and/or a temperature sensor is installed within the first flow channel; and the pressure sensor and/or the temperature sensor is electrically connected to the liquid pump.

8. The battery according to claim 3, wherein
the cooling unit further comprises a heat-absorbing structure; the heat-absorbing structure is disposed on a side of the exhaust baffle facing away from the first partition; the heat-absorbing structure is in communication with the first flow channel; and the heat-absorbing structure is configured to absorb heat from the fumes.

9. The battery according to claim 8, wherein
the heat-absorbing structure comprises a first medium and a second medium, wherein an accommodating space is provided in the side of the exhaust baffle facing away from the first partition, the accommodating space is in communication with the first flow channel, the first medium and the second medium are both disposed within the accommodating space, and when the fumes flow into the accommodating space, the first medium and the second medium come into contact with each other and undergo an endothermic reaction to absorb heat from the fumes.

10. The battery according to claim 9, wherein
the heat-absorbing structure further comprises a third partition, and the third partition is disposed within the accommodating space to divide the accommodating space into a first accommodating cavity and a second accommodating cavity, wherein the first medium is disposed in the first accommodating cavity, the second medium is disposed in the second accommodating cavity, the first accommodating cavity is in communication with the first flow channel, and when the fumes flow into the first accommodating cavity, the first accommodating cavity and the second accommodating cavity are in communication with each other to allow the first medium and the second medium to come into contact with each other and undergo an endothermic reaction to absorb heat from the fumes.

11. The battery according to claim 10, wherein
the first accommodating cavity is located below the second accommodating cavity, wherein a bottom wall of the first accommodating cavity is provided with a first inlet, and the first accommodating cavity is in communication with the first flow channel through the first inlet.

12. The battery according to claim 11, wherein
the first inlet is provided in plurality, and the plurality of first inlets are arranged in an array.

13. The battery according to claim 10, wherein
a sidewall of the first accommodating cavity is provided with a second inlet, wherein the first accommodating cavity is in communication with the first flow channel through the second inlet.

14. The battery according to claim 9, wherein
the first medium is ammonium chloride, and the second medium is water.

15. The battery according to claim 10, wherein
the third partition is provided with a second through hole, wherein a control valve is installed in the second through hole, and the control valve is configured to open when the fumes flow into the first accommodating cavity to enable communication between the first accommodating cavity and the second accommodating cavity; or
the third partition is provided with a second through hole, wherein a sealing member made of a heat-meltable material is installed in the second through hole, and when the fumes flow into the first accommodating cavity, the sealing member melts due to heat to enable communication between the first accommodating cavity and the second accommodating cavity; or
the third partition is a plate member made of a heat-meltable material, wherein when the fumes flow into the first accommodating cavity, the third partition melts due to heat to enable communication between the first accommodating cavity and the second accommodating cavity.

16. The battery according to any one of claims 2 to 15, wherein
the cooling unit is provided in plurality, and the plurality of cooling units are sequentially in communication with each other.

17. The battery according to any one of claims 1 to 15, wherein
the fume processing apparatus comprises a separation unit, wherein the separation unit is configured to separate solid particulates and/or liquids from the fumes flowing into the second chamber.

18. The battery according to any one of claims 2 to 15, wherein
the fume processing apparatus comprises a separation unit, wherein the separation unit is configured to separate solid particulates and/or liquids from the fumes flowing into the second chamber, the separation unit is in communication with the cooling unit, and the separation unit is located downstream of the cooling unit along a flow direction of the fumes.

19. The battery according to claim 18, wherein
the separation unit comprises an adsorption and filtration structure, wherein the adsorption and filtration structure is configured to adsorb and filter the solid particulates and/or liquids in the fumes.

20. The battery according to claim 19, wherein
the adsorption and filtration structure comprises at least one of activated carbon filter cotton, activated carbon filter mesh, or honeycomb ceramic filter material.

21. The battery according to claim 19, wherein
the separation unit further comprises a plurality of fourth partitions, and the plurality of fourth partitions are installed within the second chamber, wherein every two adjacent fourth partitions are spaced apart, second interval spaces formed between every two adjacent fourth partitions are in communication with each other to form a second flow channel, and the adsorption and filtration structure is disposed within the second flow channel.

22. The battery according to claim 21, wherein
the plurality of second interval spaces are sequentially in communication with each other end to end.

23. The battery according to claim 18, wherein
the separation unit is provided in plurality, and the plurality of separation units are sequentially in communication with each other.

24. The battery according to any one of claims 1 to 15, wherein
the housing is provided with an exhaust hole, wherein the exhaust hole is used to discharge the fumes processed by the fume processing apparatus to the outside of the battery.

25. An electric device, comprising the battery according to any one of claims 1 to 24.
